# EUROPEAN PATENT SPECIFICATION

(11) **EP 4 296 709 B1**
(45) Date of publication and mention of the grant of the patent: **03.06.2026**
(21) Application number: 21931427.5
(22) Date of filing: 15.03.2021
(51) Int. Cl.: G01S 7/282, G01S 7/292, G01S 13/22, G01S 7/03, G01S 13/87

(54) **RADAR DEVICE AND RADAR SYSTEM**
RADARVORRICHTUNG UND RADARSYSTEM
DISPOSITIF RADAR ET SYSTÈME RADAR

(43) Date of publication of application: 27.12.2023
(73) Proprietor: MITSUBISHI ELECTRIC CORPORATION, Chiyoda-ku Tokyo 100-8310 (JP)
(72) Inventor: ISODA, Kentaro, Tokyo 100-8310 (JP)
(74) Representative: Pfenning, Meinig & Partner mbB
(86) International application number: PCT/JP2021/010366
(87) International publication number: WO 2022/195671

(56) References cited:
- JP-A- 2007 170 846
- JP-A- H03 180 790
- JP-A- H03 180 790
- JP-A- H06 317 653
- JP-U- H0 336 984
- JP-U- S60 189 867
- JP-U- S60 189 867
- US-A- 5 047 778
- US-A1- 2013 272 349
- US-B1- 9 086 476
- KALANTARI MILAD ET AL: "4.7 A Single-Antenna W-Band FMCW Radar Front-End Utilizing Adaptive Leakage Cancellation", 2020 IEEE INTERNATIONAL SOLID- STATE CIRCUITS CONFERENCE - (ISSCC), IEEE, 16 February 2020 (2020-02-16), pages 88 - 90, XP033754526, DOI: 10.1109/ISSCC19947.2020.9063129
- ZHOU JIN ET AL: "Integrated Wideband Self-Interference Cancellation in the RF Domain for FDD and Full-Duplex Wireless", IEEE JOURNAL OF SOLID-STATE CIRCUITS, IEEE, USA, vol. 50, no. 12, 1 December 2015 (2015-12-01), pages 3015 - 3031, XP011591041, ISSN: 0018-9200, [retrieved on 20151124], DOI: 10.1109/JSSC.2015.2477043
- DENG HAI ET AL: "Simultaneous measurement of target range and velocity using a hybrid coding waveform scheme", 2004 INTERNATIONAL WAVEFORM DIVERSITY & DESIGN CONFERENCE, IEEE, 8 November 2004 (2004-11-08), pages 1 - 5, XP033331518, ISBN: 978-1-5090-3177-1, [retrieved on 20180314], DOI: 10.1109/IWDDC.2004.8317562

## Description

### TECHNICAL FIELD

The present disclosure relates to a radar device.

### BACKGROUND ART

There is a case where a radar device transmits and receives a plurality of signals each of which has a different property in order to measure a plurality of types of parameters regarding a target. For example, Non-Patent Literature 1 discloses a radar device using a low pulse repetition frequency (LPRF) signal and a high pulse repetition frequency (HPRF) signal having pulse repetition periods different from each other. The radar device uses the LPRF signal and the HPRF signal orthogonal to each other as transmission/reception signals. The radar device measures a distance to the target by the LPRF signal, and measures a speed of the target by the HPRF signal.

US 2013/272349 A1 discloses that a notch frequency signal is added to a transmitter leakage signal to attenuate the transmitter leakage signal prior to demodulation of a desired receiver signal by a receiver.

KALANTARI MILAD ET AL: "4.7 A Single-Antenna W-Band FMCW Radar Front-End Utilizing Adaptive Leakage Cancellation", 2020 IEEE International Solid-State Circuits Conference, 2020-02-16, pages 88-90, discloses that a canceller can be modeled by an IQ modulator and a subtraction node, which forms a sharp notch filter, centered at the TX frequency at the input of the LNA.

US 9086476 B1 discloses a radar system that rejects intermodulation products than can generate false targets.

ZHOU JIN ET AL.: "Integrated Wideband Self-Interference Cancellation in the RF Domain for FDD and Full-Duplex Wireless", IEEE Journal of Solid-State Circuits, IEEE, USA, 2015-12-01, pages 3015-3031, discloses that Integrated wideband SI cancellation (SIC) in the RF domain is accomplished through: 1) a bank of tunable, reconfigurable second-order high-Q RF bandpass filters in the canceller that emulate the antenna interface's isolation (essentially frequency-domain equalization in the RF domain) and 2) a linear N-path Gm- C filter implementation with embedded variable attenuation and phase shifting.

### CITATION LIST

### NON-PATENT LITERATURE

Non-Patent Literature 1: H. Deng, et al., "Simultaneous measurement of target range and velocity using a hybrid coding waveform scheme," 2004 International Waveform Diversity & Design Conference, 2014.

### SUMMARY OF INVENTION

### TECHNICAL PROBLEM

However, the radar device that transmits and receives a plurality of signals as described above has a problem that, due to magnitude of transmission power when transmitting a transmission signal, a reflection signal obtained by a transmitted signal different from the transmission signal being reflected by a target cannot be received during a transmission period of the transmission signal. Therefore, a transmission blind area, in which a reception signal lacks, occurs during the transmission period.

The present disclosure is achieved to solve the problem described above, and an object thereof is to provide a technology for reducing the transmission blind.

### SOLUTION TO PROBLEM

The present invention is set out in the appended set of claims. A radar device according to the present disclosure includes an antenna to transmit a plurality of transmission signals each of which has a different frequency to a target, individually, and acquire a reception signal by receiving a reflection signal reflected from the target, a circulator to output the plurality of transmission signals each of which has been input from a transmission side at different timing to the antenna, individually, and output the reception signal acquired by the antenna to a reception side, and a suppression band variable filter to which the reception signal output by the circulator to the reception side is input, the suppression band variable filter to, while the circulator outputs any one transmission signal out of the plurality of transmission signals to the antenna and the antenna transmits the transmission signal, suppress a signal of the same frequency channel as a frequency channel of the transmission signal and pass a signal of a frequency channel different from the frequency channel of the transmission signal.

### ADVANTAGEOUS EFFECTS OF INVENTION

According to the present disclosure, transmission blind can be reduced.

### BRIEF DESCRIPTION OF DRAWINGS

FIG. 1 is a block diagram illustrating a configuration of a radar device according to a first embodiment.
FIG. 2 is a flowchart illustrating a transmitting and receiving method by the radar device according to the first embodiment.
FIG. 3 illustrates a configuration of an antenna unit in a case where a suppression band variable filter according to a specific example of the first embodiment is not provided.
FIG. 4 illustrates the antenna unit when the suppression band variable filter according to the specific example of the first embodiment is provided.
FIG. 5 is a diagram illustrating a filter characteristic by the suppression band variable filter according to the specific example of the first embodiment.
FIG. 6A is a block diagram illustrating a hardware configuration that implements a function of a radar signal processing unit of the radar device. FIG. 6B is a block diagram illustrating a hardware configuration that executes software that implements the function of the radar signal processing unit of the radar device.
FIG. 7 is a block diagram illustrating a configuration of a radar device according to a second embodiment.
FIG. 8 is a diagram illustrating a signal before being input to a suppression band variable filter according to the second embodiment.
FIG. 9 is a flowchart illustrating a transmitting and receiving method by the radar device according to the second embodiment.
FIG. 10 is a block diagram illustrating a configuration of a first radar device and a second radar device according to a third embodiment.

### DESCRIPTION OF EMBODIMENTS

A mode for embodying the present disclosure is hereinafter described with reference to the attached drawings in order to describe the present disclosure in further detail.

### First Embodiment

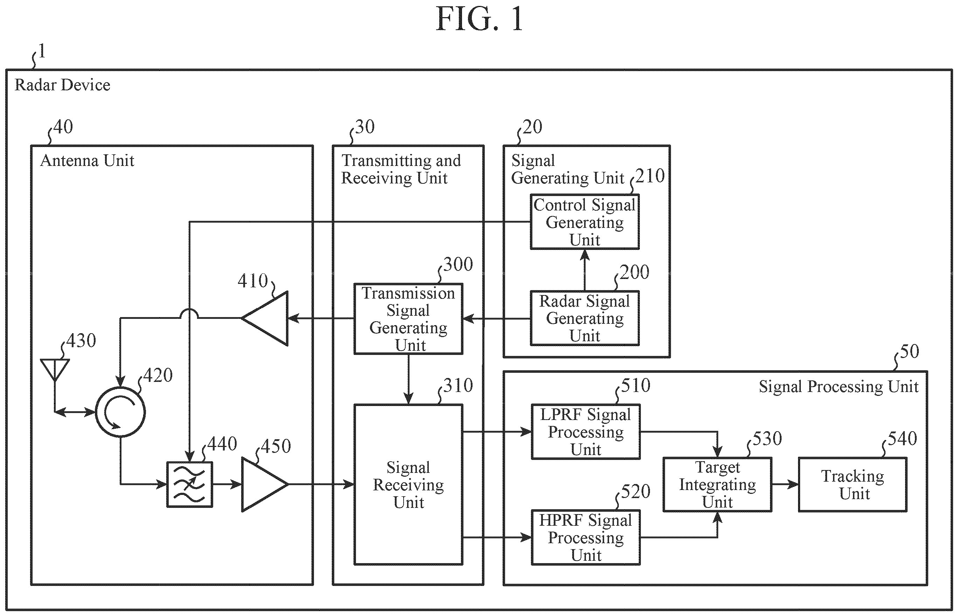

FIG. 1 is a block diagram illustrating a configuration of a radar device 1 according to a first embodiment. As illustrated in FIG. 1, the radar device 1 includes a signal generating unit 20, a transmitting and receiving unit 30, an antenna unit 40, and a signal processing unit 50. The signal generating unit 20 includes a radar signal generating unit 200 and a control signal generating unit 210. The transmitting and receiving unit 30 includes a transmission signal generating unit 300 and a signal receiving unit 310. The antenna unit 40 includes a high power amplifier 410, a circulator 420, an antenna 430, a suppression band variable filter 440, and a low noise amplifier 450. The signal processing unit 50 includes an LPRF signal processing unit 510, an HPRF signal processing unit 520, a target integrating unit 530, and a tracking unit 540.

The radar signal generating unit 200 of the signal generating unit 20 generates a plurality of radar signals each of which has a different frequency at different timings. More specifically, in the first embodiment, the radar signal generating unit 200 generates an LPRF signal and an HPRF signal having frequencies different from each other at different timings. That is, the radar signal generating unit 200 alternately generates the LPRF signal and the HPRF signal. The radar signal generating unit 200 outputs the LPRF signal and the HPRF signal each of which has been generated at different timing to the transmission signal generating unit 300, individually. The radar signal generating unit 200 outputs the frequency, a transmission start timing, and a transmission stop timing of the LPRF signal, and the frequency, a transmission start timing, and a transmission stop timing of the HPRF signal each of which has been generated at different timing to the control signal generating unit 210, individually.

The control signal generating unit 210 of the signal generating unit 20 generates a control signal that changes a suppression band to be suppressed by the suppression band variable filter 440 to be described later. More specifically, in the first embodiment, the control signal generating unit 210 generates the control signal that changes the suppression band to be suppressed by the suppression band variable filter 440 for each radar signal on the basis of the frequency, the transmission start timing, and the transmission stop timing of the radar signal output by the radar signal generating unit 200.

More specifically, the control signal generating unit 210 generates the control signal that changes the suppression band to be suppressed by the suppression band variable filter 440 on the basis of the frequency, the transmission start timing, and the transmission stop timing of the LPRF signal output by the radar signal generating unit 200. On the other hand, at a timing different from that, the control signal generating unit 210 generates the control signal that changes the suppression band to be suppressed by the suppression band variable filter 440 on the basis of the frequency, the transmission start timing, and the transmission stop timing of the HPRF signal output by the radar signal generating unit 200. The control signal generating unit 210 outputs the generated control signal to the suppression band variable filter 440.

The transmission signal generating unit 300 of the transmitting and receiving unit 30 generates a transmission signal by performing frequency conversion on the radar signal generated by the radar signal generating unit 200.

More specifically, in the first embodiment, the transmission signal generating unit 300 generates an LPRF transmission signal by performing frequency conversion on the LPRF signal generated by the radar signal generating unit 200. On the other hand, at a timing different from that, the transmission signal generating unit 300 generates an HPRF transmission signal by performing frequency conversion on the HPRF signal generated by the radar signal generating unit 200. The transmission signal generating unit 300 outputs the LPRF transmission signal and the HPRF transmission signal each of which has been generated at different timing to the high power amplifier 410, individually. The transmission signal generating unit 300 outputs the LPRF transmission signal and the HPRF transmission signal each of which has been generated at different timing to the signal receiving unit 310, individually.

The high power amplifier 410 of the antenna unit 40 amplifies the transmission signal generated by the transmission signal generating unit 300. More specifically, in the first embodiment, the high power amplifier 410 amplifies the LPRF transmission signal generated by the transmission signal generating unit 300. On the other hand, at a timing different from that, the high power amplifier 410 amplifies the HPRF transmission signal generated by the transmission signal generating unit 300. The high power amplifier 410 outputs the LPRF transmission signal and the HPRF transmission signal each of which has been generated at different timing to the circulator 420, individually.

The circulator 420 of the antenna unit 40 outputs a plurality of transmission signals each of which has been input at different timing from a transmission side to the antenna 430, individually. More specifically, in the first embodiment, the circulator 420 outputs the plurality of transmission signals each of which has been output by the high power amplifier 410 at different timing to the antenna 430, individually. More specifically, the circulator 420 outputs the LPRF transmission signal and the HPRF transmission signal each of which has been output by the high power amplifier 410 at different timing to the antenna 430, individually.

The antenna 430 of the antenna unit 40 transmits the plurality of transmission signals each of which has a different frequency to a target, individually. More specifically, in the first embodiment, the antenna 430 transmits the plurality of transmission signals each of which has been output by the circulator 420 at different timing to the target, individually.

More specifically, in the first embodiment, the antenna 430 transmits the LPRF transmission signal and the HPRF transmission signal each of which has been output by the circulator 420 at different timing to the target, individually.

The antenna 430 acquires a reception signal by receiving a reflection signal reflected from the target. More specifically, in the first embodiment, the antenna 430 acquires a plurality of reception signals, individually by receiving a plurality of reflection signals each of which has been reflected from the target at different timing, individually.

More specifically, in the first embodiment, the antenna 430 acquires an LPRF reception signal and an HPRF reception signal by receiving an LPRF reflection signal and an HPRF reflection signal each of which has been reflected from the target at different timing, respectively. The antenna 430 outputs the LPRF reception signal and the HPRF reception signal each of which has been acquired at different timing to the circulator 420, individually.

The circulator 420 of the antenna unit 40 outputs the reception signal acquired by the antenna 430 to a reception side (a circuit leading to the suppression band variable filter 440). More specifically, in the first embodiment, the circulator 420 outputs the plurality of reception signals each of which has been acquired by the antenna 430 at different timing to the reception side, individually.

More specifically, in the first embodiment, the circulator 420 outputs the LPRF reception signal and the HPRF reception signal each of which has been acquired by the antenna 430 at different timing to the reception side, individually.

The suppression band variable filter 440 of the antenna unit 40 is a filter, to which the reception signal output by the circulator 420 to the reception side is input. While the circulator 420 outputs any one transmission signal out of the plurality of transmission signals to the antenna 430 and the antenna 430 transmits the transmission signal, the suppression band variable filter 440 suppresses a signal of the same frequency channel as the frequency channel of the transmission signal.

On the other hand, while the circulator 420 outputs any one transmission signal out of the plurality of transmission signals to the antenna 430 and the antenna 430 transmits the transmission signal, the suppression band variable filter 440 passes a signal of a frequency channel different from the frequency channel of the transmission signal. Note that, for a reason described later, the signal passed through the suppression band variable filter 440 is the reception signal output by the circulator 420 to the reception side.

More specifically, in the first embodiment, while the circulator 420 outputs any one transmission signal out of the plurality of transmission signals to the antenna 430 and the antenna 430 transmits the transmission signal, the suppression band variable filter 440 suppresses the signal of the same frequency channel as the frequency channel of the transmission signal on the basis of the control signal (the control signal corresponding to the transmission signal) generated by the control signal generating unit 210.

On the other hand, while the circulator 420 outputs any one transmission signal of the plurality of transmission signals to the antenna 430 and the antenna 430 transmits the transmission signal, the suppression band variable filter 440 passes the signal of the frequency channel different from the frequency channel of the transmission signal on the basis of the control signal (the control signal corresponding to the transmission signal) generated by the control signal generating unit 210.

More specifically, in the first embodiment, while the circulator 420 outputs any one transmission signal out of the LPRF transmission signal and the HPRF transmission signal to the antenna 430 and the antenna 430 transmits the transmission signal, the suppression band variable filter 440 suppresses the signal of the same frequency channel as the frequency channel of the transmission signal on the basis of the control signal (the control signal corresponding to the transmission signal) generated by the control signal generating unit 210. For example, while the circulator 420 outputs the LPRF transmission signal to the antenna 430 and the antenna 430 transmits the LPRF transmission signal, the suppression band variable filter 440 suppresses the LPRF reception signal on the basis of the control signal generated by the control signal generating unit 210. For example, at a timing different from that, while the circulator 420 outputs the HPRF transmission signal to the antenna 430 and the antenna 430 transmits the HPRF transmission signal, the suppression band variable filter 440 suppresses the HPRF reception signal on the basis of the control signal generated by the control signal generating unit 210.

On the other hand, while the circulator 420 outputs any one transmission signal out of the LPRF transmission signal and the HPRF transmission signal to the antenna 430 and the antenna 430 transmits the transmission signal, the suppression band variable filter 440 passes the signal of the frequency channel different from the frequency channel of the transmission signal on the basis of the control signal (the control signal corresponding to the transmission signal) generated by the control signal generating unit 210. For example, while the circulator 420 outputs the LPRF transmission signal to the antenna 430 and the antenna 430 transmits the LPRF transmission signal, the suppression band variable filter 440 passes the HPRF reception signal on the basis of the control signal generated by the control signal generating unit 210. For example, at a timing different from that, while the circulator 420 outputs the HPRF transmission signal to the antenna 430 and the antenna 430 transmits the HPRF transmission signal, the suppression band variable filter 440 passes the LPRF reception signal on the basis of the control signal generated by the control signal generating unit 210.

Note that, in the first embodiment, while the transmission of the transmission signal by the antenna 430 stops, the suppression band variable filter 440 passes all the input signals. More specifically, in the first embodiment, while the transmission of the transmission signal by the antenna 430 stops, the suppression band variable filter 440 passes all the input signals on the basis of the control signal generated by the control signal generating unit 210. More specifically, in the first embodiment, while the transmission of the transmission signal by the antenna 430 stops, the suppression band variable filter 440 passes the LPRF reception signal and the HPRF reception signal on the basis of the control signal generated by the control signal generating unit 210, individually.

For example, the suppression band variable filter 440 as described above is a tunable filter. For example, the suppression band variable filter 440 as described above includes a plurality of band rejection filters.

The low noise amplifier 450 of the antenna unit 40 performs low noise amplification on the reception signal passed through the suppression band variable filter 440. More specifically, in the first embodiment, the low noise amplifier 450 performs low noise amplification on the LPRF reception signal and the HPRF reception signal each of which has been passed through the suppression band variable filter 440 at different timing, individually. The low noise amplifier 450 outputs the LPRF reception signal and the HPRF reception signal each of which has been subjected to low noise amplification at different timing to the signal receiving unit 310.

The signal receiving unit 310 of the transmitting and receiving unit 30 generates a video signal by performing frequency conversion on the reception signal subjected to low noise amplification by the low noise amplifier 450 and converting the frequency-converted reception signal from an analog signal to a digital signal.

More specifically, in the first embodiment, the signal receiving unit 310 generates an LPRF video signal and an HPRF video signal by performing frequency conversion on the LPRF reception signal and the HPRF reception signal each of which has been subjected to low noise amplification by the low noise amplifier 450 at different timing, and converting the frequency-converted LPRF reception signal and HPRF reception signal from an analog signal to a digital signal, respectively. More specifically, in the first embodiment, the signal receiving unit 310 performs frequency conversion on the LPRF reception signal subjected to low noise amplification by the low noise amplifier 450 on the basis of the LPRF transmission signal generated by the transmission signal generating unit 300. On the other hand, the signal receiving unit 310 performs frequency conversion on the HPRF reception signal subjected to low noise amplification by the low noise amplifier 450 on the basis of the HPRF transmission signal generated by the transmission signal generating unit 300. The signal receiving unit 310 outputs the generated LPRF video signal to the LPRF signal processing unit 510. The signal receiving unit 310 outputs the generated HPRF video signal to the HPRF signal processing unit 520.

The LPRF signal processing unit 510 of the signal processing unit 50 performs, for example, pulse compression processing, clutter suppression processing, inter-hit integration processing or the like and performs constant false alarm (CFAR) processing on the LPRF video signal generated by the signal receiving unit 310, thereby detecting the target. The LPRF signal processing unit 510 outputs information regarding the detected target to the target integrating unit 530.

The HPRF signal processing unit 520 of the signal processing unit 50 performs, for example, inter-hit integration processing or the like and performs constant false alarm (CFAR) processing on the HPRF video signal generated by the signal receiving unit 310, thereby detecting the target. The HPRF signal processing unit 520 outputs information regarding the detected target to the target integrating unit 530.

The target integrating unit 530 of the signal processing unit 50 integrates the information regarding the target detected by the LPRF signal processing unit 510 and the information regarding the target detected by the HPRF signal processing unit 520. The target integrating unit 530 outputs the integrated information to the tracking unit 540.

The tracking unit 540 of the signal processing unit 50 performs tracking processing of the target on the basis of the information integrated by the target integrating unit 530.

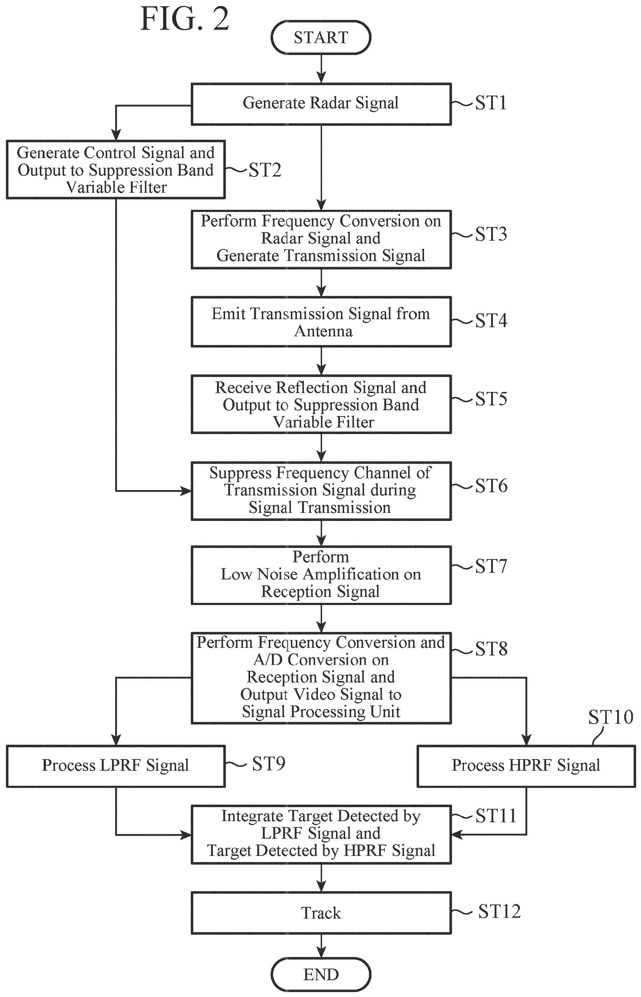

Hereinafter, an operation of the radar device 1 according to the first embodiment is described with reference to the drawings. FIG. 2 is a flowchart illustrating a transmitting and receiving method by the radar device 1 according to the first embodiment.

As illustrated in FIG. 2, the radar signal generating unit 200 generates the LPRF signal and the HPRF signal having the frequencies different from each other at different timings (step ST1). The radar signal generating unit 200 outputs the LPRF signal and the HPRF signal each of which has been generated at different timing to the transmission signal generating unit 300. The radar signal generating unit 200 outputs the frequency, a transmission start timing, and a transmission stop timing of the LPRF signal, and the frequency, a transmission start timing, and a transmission stop timing of the HPRF signal each of which has been generated at different timing to the control signal generating unit 210, individually.

At step ST2, the control signal generating unit 210 generates the control signal that changes the suppression band to be suppressed by the suppression band variable filter 440 on the basis of the frequency, the transmission start timing, and the transmission stop timing of the LPRF signal output by the radar signal generating unit 200. On the other hand, at a timing different from that, the control signal generating unit 210 generates the control signal that changes the suppression band to be suppressed by the suppression band variable filter 440 on the basis of the frequency, the transmission start timing, and the transmission stop timing of the HPRF signal output by the radar signal generating unit 200. The control signal generating unit 210 outputs the control signals for the respective radar signals each of which has been generated at different timing to the suppression band variable filter 440.

The transmission signal generating unit 300 generates the LPRF transmission signal and the HPRF transmission signal having frequencies different from each other by performing frequency conversion on the LPRF signal and the HPRF signal each of which has been generated by the radar signal generating unit 200 at different timing, respectively (step ST3). The transmission signal generating unit 300 outputs the LPRF transmission signal and the HPRF transmission signal each of which has been generated at different timing to the antenna 430 via the high power amplifier 410 and the circulator 420, individually. Note that, the LPRF transmission signal and the HPRF transmission signal are amplified by the high power amplifier 410, individually.

The antenna 430 transmits the LPRF transmission signal and the HPRF transmission signal each of which has been output by the circulator 420 at different timing to the target, individually (step ST4).

The antenna 430 acquires the LPRF reception signal and the HPRF reception signal by receiving the LPRF reflection signal and the HPRF reflection signal each of which has been reflected from the target at different timing, respectively (step ST5). The antenna 430 outputs the LPRF reception signal and the HPRF reception signal each of which has been acquired at different timing to the suppression band variable filter 440 via the circulator 420.

At step ST6, while the circulator 420 outputs any one transmission signal out of the LPRF transmission signal and the HPRF transmission signal to the antenna 430 and the antenna 430 transmits the transmission signal, the suppression band variable filter 440 suppresses the signal of the same frequency channel as the frequency channel of the transmission signal on the basis of the control signal generated by the control signal generating unit 210 at step ST2. Furthermore, at step ST6, while the circulator 420 outputs any one transmission signal out of the LPRF transmission signal and the HPRF transmission signal to the antenna 430 and the antenna 430 transmits the transmission signal, the suppression band variable filter 440 passes the signal of the frequency channel different from the frequency channel of the transmission signal on the basis of the control signal generated by the control signal generating unit 210.

The low noise amplifier 450 performs low noise amplification on the LPRF reception signal and the HPRF reception signal each of which has been transmitted through the suppression band variable filter 440 at different timing, individually (step ST7). The low noise amplifier 450 outputs the LPRF reception signal and the HPRF reception signal each of which has been subjected to low noise amplification at different timing to the signal receiving unit 310, individually.

The signal receiving unit 310 generates the LPRF video signal and the HPRF video signal by performing frequency conversion on the LPRF reception signal and the HPRF reception signal each of which has been subjected to low noise amplification by the low noise amplifier 450 at different timing, and converting the frequency-converted LPRF reception signal and HPRF reception signal from an analog signal to a digital signal, respectively (step ST8). The signal receiving unit 310 outputs the generated LPRF video signal to the LPRF signal processing unit 510. The signal receiving unit 310 outputs the generated HPRF video signal to the HPRF signal processing unit 520.

The LPRF signal processing unit 510 performs, for example, pulse compression processing, clutter suppression processing, inter-hit integration processing or the like and performs constant false alarm (CFAR) processing on the LPRF video signal generated by the signal receiving unit 310, thereby detecting the target (step ST9). The LPRF signal processing unit 510 outputs information regarding the detected target to the target integrating unit 530.

The HPRF signal processing unit 520 of the signal processing unit 50 performs, for example, inter-hit integration processing or the like and performs constant false alarm (CFAR) processing on the HPRF video signal generated by the signal receiving unit 310, thereby detecting the target (step ST10). The HPRF signal processing unit 520 outputs information regarding the detected target to the target integrating unit 530.

The target integrating unit 530 integrates the information regarding the target detected by the LPRF signal processing unit 510 and the information regarding the target detected by the HPRF signal processing unit 520 (step ST11). The target integrating unit 530 outputs the integrated information to the tracking unit 540.

The tracking unit 540 performs tracking processing of the target on the basis of the information integrated by the target integrating unit 530 (step ST12).

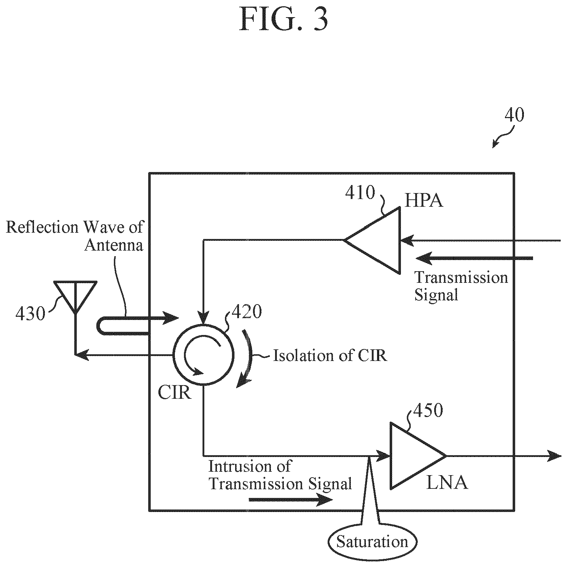

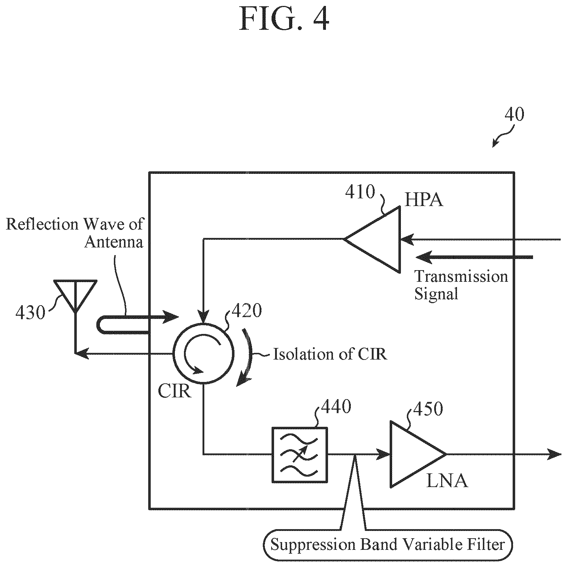

Hereinafter, a specific example of an operation of the suppression band variable filter 440 of the radar device 1 according to the first embodiment is described with reference to the drawings. Note that, the specific example is a specific example at step ST6 described above. FIGS. 3 and 4 are schematic diagrams for describing the operation of the suppression band variable filter 440 according to the specific example. FIG. 3 illustrates a configuration of the antenna unit 40 when the suppression band variable filter 440 according to the specific example is not provided. FIG. 4 illustrates a configuration of the antenna unit 40 when the suppression band variable filter 440 according to the specific example is provided.

For example, in the radar device 1, while the antenna 430 transmits the transmission signal, as illustrated in FIG. 3, the transmission signal passing through the high power amplifier 410 (HPA) passes through the circulator 420 (CIR), is reflected by the antenna 430, and intrudes into the reception side via the circulator 420 (CIR). Alternatively, the transmission signal passing through the high power amplifier 410 (HPA) directly intrudes into the reception side via the circulator 420 (CIR). As a result, the device on the reception side might be saturated or broken. Therefore, although not illustrated, in general, a countermeasure is taken to protect circuits following the low noise amplifier 450 (LNA) by inserting a switch in front of the low noise amplifier 450 (LNA), and turning off the switch while the transmission signal is transmitted.

However, in this configuration, during a transmission period of any one transmission signal out of the LPRF signal and the HPRF signal, it is not possible to receive the reflection signal, which is the other transmission signal out of the LPRF signal and the HPRF signal reflected by the target. Therefore, a transmission blind in which a reception signal lacks occurs during the transmission period.

In this specific example, a frequency f1 is assigned to the LPRF signal, and a frequency f2 is assigned to the HPRF signal. Then, as illustrated in FIG. 4, the suppression band variable filter 440 is inserted in front of the low noise amplifier 450 (LNA).

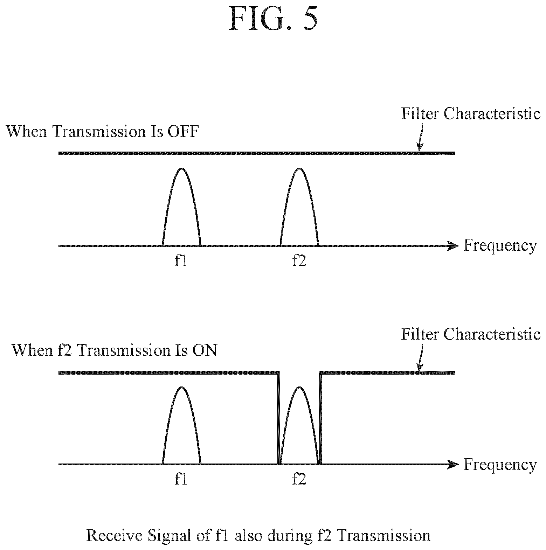

FIG. 5 is a diagram illustrating a filter characteristic by the suppression band variable filter 440 according to the specific example. As illustrated in FIG. 5, while the transmission of the transmission signal by the antenna 430 stops, the suppression band variable filter 440 passes all the input LPRF reception signal having the frequency f1 and HPRF reception signal having the frequency f2 on the basis of the control signal generated by the control signal generating unit 210.

On the other hand, as illustrated in FIG. 5, while the circulator 420 outputs the HPRF transmission signal having the frequency f2 to the antenna 430 and the antenna 430 transmits the HPRF transmission signal having the frequency f2, the suppression band variable filter 440 suppresses the signal of the same frequency channel as the frequency channel of the HPRF transmission signal having the frequency f2 on the basis of the control signal generated by the control signal generating unit 210. As a result, the HPRF transmission signal having the frequency f2 which intrudes into the reception side from the circulator 420 (CIR) can be cut off. Note that, the configuration described above also applies to a case where the HPRF transmission signal having the frequency f2 is replaced with an LPRF transmission signal having the frequency f1.

While the circulator 420 outputs the HPRF transmission signal having the frequency f2 to the antenna 430 and the antenna 430 transmits the HPRF transmission signal having the frequency f2, the suppression band variable filter 440 passes the LPRF signal having the frequency f1 of the frequency channel different from the frequency channel of the HPRF transmission signal having the frequency f2 on the basis of the control signal generated by the control signal generating unit 210. Note that the configuration described above also applies to a case where the HPRF transmission signal having the frequency f2 is replaced with the LPRF transmission signal having the frequency f1, and the LPRF signal having the frequency f1 is replaced with the HPRF signal having the frequency f2.

According to the configuration described above, the reception signal derived from the radar signal having the frequency other than the transmission frequency can be received also while the transmission signal is transmitted, and the transmission blind can be reduced. Therefore, also in a configuration using the LPRF signal and the HPRF signal as the signals to be transmitted and received, the transmission blind can be reduced.

Note that, as described above, examples of the suppression band variable filter 440 include the tunable filter and the like, for example. For example, it is also conceivable to use the suppression band variable filter 440 including a plurality of filters (band rejection filters) for suppressing a predetermined frequency in parallel and switch them to make the suppression band variable.

Each function of the LPRF signal processing unit 510, the HPRF signal processing unit 520, the target integrating unit 530, and the tracking unit 540 in the signal processing unit 50 of the radar device 1 is implemented by a processing circuit. That is, the signal processing unit 50 of the radar device 1 includes a processing circuit for executing processing at each step illustrated in FIG. 2. The processing circuit may be dedicated hardware, but may also be a central processing unit (CPU) that executes a program stored in a memory.

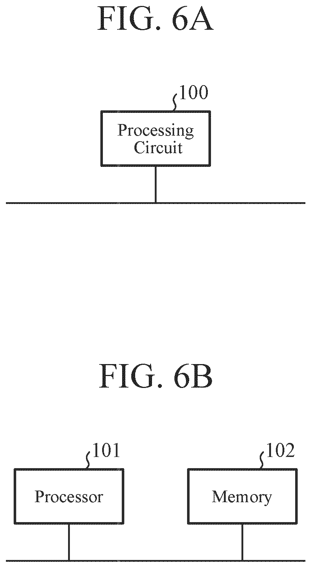

FIG. 6A is a block diagram illustrating a hardware configuration that implements a function of the signal processing unit 50 of the radar device 1. FIG. 6B is a block diagram illustrating a hardware configuration that executes software that implements the function of the signal processing unit 50 of the radar device 1.

When the processing circuit described above is a processing circuit 100 of dedicated hardware illustrated in FIG. 6A, the processing circuit 100 corresponds to, for example, a single circuit, a composite circuit, a programmed processor, a parallel-programmed processor, an application specific integrated circuit (ASIC), a field-programmable gate array (FPGA), or a combination of them.

Each function of the LPRF signal processing unit 510, the HPRF signal processing unit 520, the target integrating unit 530, and the tracking unit 540 in the signal processing unit 50 of the radar device 1 may be implemented by separate processing circuits, or they may be collectively implemented by one processing circuit.

When the processing circuit described above is a processor 101 illustrated in FIG. 6B, each function of the LPRF signal processing unit 510, the HPRF signal processing unit 520, the target integrating unit 530, and the tracking unit 540 in the signal processing unit 50 of the radar device 1 is implemented by software, firmware, or a combination of software and firmware.

Note that, software or firmware is described as a program and stored in a memory 102.

The processor 101 implements each function of the LPRF signal processing unit 510, the HPRF signal processing unit 520, the target integrating unit 530, and the tracking unit 540 in the signal processing unit 50 of the radar device 1 by reading and executing the program stored in the memory 102. That is, the signal processing unit 50 of the radar device 1 is provided with the memory 102 for storing the program by which processing at each step illustrated in FIG. 2 is executed as a result when each of the functions is executed by the processor 101.

The program allows a computer to execute each procedure or method performed in the LPRF signal processing unit 510, the HPRF signal processing unit 520, the target integrating unit 530, and the tracking unit 540 in the signal processing unit 50 of the radar device 1. The memory 102 may also be a computer-readable storage medium storing the program for allowing the computer to function as the LPRF signal processing unit 510, the HPRF signal processing unit 520, the target integrating unit 530, and the tracking unit 540 in the signal processing unit 50 of the radar device 1.

The processor 101 corresponds to a central processing unit (CPU), a processing unit, an arithmetic device, a processor, a microprocessor, a microcomputer, a digital signal processor (DSP) or the like, for example.

The memory 102 corresponds to, for example, a non-volatile or volatile semiconductor memory such as a random access memory (RAM), a read only memory (ROM), a flash memory, an erasable programmable read only memory (EPROM), and an electrically-EPROM (EEPROM), magnetic disk such as a hard disk and a flexible disk, a flexible disk, an optical disk, a compact disc, a mini disc, a compact disc (CD), a digital versatile disc (DVD) and the like.

Some functions of the LPRF signal processing unit 510, the HPRF signal processing unit 520, the target integrating unit 530, and the tracking unit 540 in the signal processing unit 50 of the radar device 1 may be implemented by dedicated hardware, and some thereof may be implemented by software or firmware.

For example, each function of the LPRF signal processing unit 510 and the HPRF signal processing unit 520 is implemented by a processing circuit as dedicated hardware. As for the target integrating unit 530 and the tracking unit 540, the processor 101 may implement the functions by reading and executing the program stored in the memory 102.

In this manner, the processing circuit can implement each of the functions described above by hardware, software, firmware, or combination thereof.

As described above, the radar device 1 according to the first embodiment includes the antenna 430 that transmits the plurality of transmission signals each of which has a different frequency to the target, individually, and acquires the reception signal by receiving the reflection signal reflected from the target, the circulator 420 that outputs the plurality of transmission signals each of which has been input from the transmission side at different timing to the antenna 430, individually, and outputs the reception signal acquired by the antenna 430 to the reception side, and the suppression band variable filter 440 to which the reception signal output by the circulator 420 to the reception side is input, the suppression band variable filter 440 that, while the circulator 420 outputs any one transmission signal out of the plurality of transmission signals to the antenna 430 and the antenna 430 transmits the transmission signal, suppresses the signal of the same frequency channel as the frequency channel of the transmission signal, and passes the signal of the frequency channel different from the frequency channel of the transmission signal.

According to the configuration described above, while the circulator 420 outputs any one transmission signal out of the plurality of transmission signals to the antenna 430 and the antenna 430 transmits the transmission signal, it is possible to receive the reception signal of the frequency channel different from the frequency channel of the transmission signal while suppressing the transmission signal which intrudes into the reception side from the circulator 420. Therefore, it is possible to reduce the transmission blind in which the reception signal lacks during the transmission period of the transmission signal.

While the transmission of the transmission signal by the antenna 430 stops, the suppression band variable filter 440 in the radar device 1 according to the first embodiment passes all the input signals.

According to the configuration described above, the reception signal can be received also while the transmission of the transmission signal stops.

The suppression band variable filter 440 in the radar device 1 according to the first embodiment is a tunable filter.

According to the configuration described above, while the circulator 420 outputs any one transmission signal out of the plurality of transmission signals to the antenna 430 and the antenna 430 transmits the transmission signal, it is possible to suitably receive the reception signal of the frequency channel different from the frequency channel of the transmission signal while suitably suppressing the transmission signal which intrudes into the reception side from the circulator 420. Therefore, it is possible to reduce the transmission blind in which the reception signal lacks during the transmission period of the transmission signal.

The suppression band variable filter 440 in the radar device 1 according to the first embodiment includes a plurality of band rejection filters.

According to the configuration described above, while the circulator 420 outputs any one transmission signal out of the plurality of transmission signals to the antenna 430 and the antenna 430 transmits the transmission signal, it is possible to suitably receive the reception signal of the frequency channel different from the frequency channel of the transmission signal while suitably suppressing the transmission signal which intrudes into the reception side from the circulator 420. Therefore, it is possible to reduce the transmission blind in which the reception signal lacks during the transmission period of the transmission signal.

The plurality of transmission signals in the radar device 1 according to the first embodiment is the LPRF transmission signals and the HPRF transmission signals having frequencies different from each other.

According to the configuration described above, while the circulator 420 outputs any one transmission signal out of the LPRF transmission signal and the HPRF transmission signal to the antenna 430 and the antenna 430 transmits the one transmission signal, it is possible to receive the reception signal derived from the other transmission signal of the frequency channel different from the frequency channel of the one transmission signal while suppressing the one transmission signal which intrudes into the reception side from the circulator 420. Therefore, it is possible to reduce the transmission blind in which the reception signal lacks during the transmission period of the transmission signal.

The radar device 1 according to the first embodiment further includes the control signal generating unit 210 that generates the control signal that changes the suppression band to be suppressed by the suppression band variable filter 440.

According to the configuration described above, while the circulator 420 outputs any one transmission signal out of the plurality of transmission signals to the antenna 430 and the antenna 430 transmits the transmission signal, it is possible to receive the reception signal of the frequency channel different from the frequency channel of the transmission signal while suppressing the transmission signal which intrudes into the reception side from the circulator 420 by changing the suppression band to be suppressed by the suppression band variable filter 440 by the control signal generated by the control signal generating unit 210. Therefore, it is possible to reduce the transmission blind in which the reception signal lacks during the transmission period of the transmission signal.

### Second Embodiment

In a second embodiment, a configuration in which the antenna unit 40 of the radar device 1 according to the first embodiment further includes a noise signal suppressing unit that suppresses a noise signal is described.

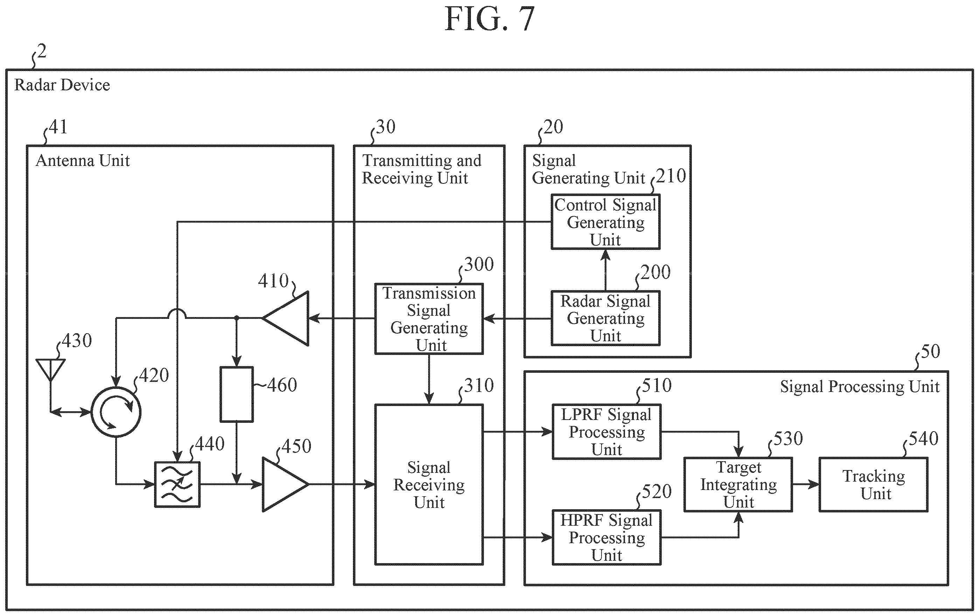

Hereinafter, the second embodiment is described with reference to the drawings. Note that, a configuration having a function similar to that in the configuration described in the first embodiment is assigned with the same reference sign, and description thereof is not repeated. FIG. 7 is a block diagram illustrating a configuration of a radar device 2 according to the second embodiment. As illustrated in FIG. 7, in the radar device 2 according to the second embodiment, an antenna unit 41 further includes a decoupling circuit 460 as a noise signal suppressing unit, as compared with the radar device 1 according to the first embodiment.

The decoupling circuit 460 which is the noise signal suppressing unit suppresses a noise signal accompanying the transmission signal, included in a signal passed through a suppression band variable filter 440 while a circulator 420 outputs any one transmission signal out of a plurality of transmission signals to an antenna 430 and the antenna 430 transmits the transmission signal.

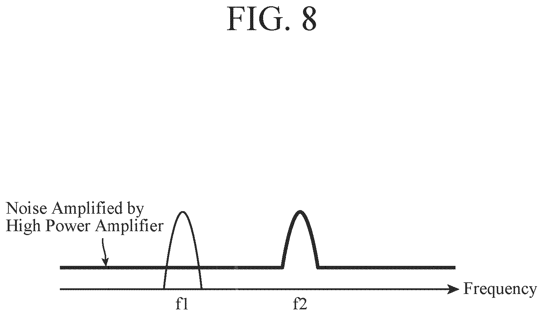

Hereinafter, the decoupling circuit 460 according to the second embodiment is described in detail with reference to the drawings. FIG. 8 is a diagram illustrating a signal before being input to the suppression band variable filter 440. In FIG. 8, as described in the specific example in the first embodiment, it is assumed that a frequency f1 is assigned to an LPRF signal, and a frequency f2 is assigned to an HPRF signal.

As illustrated in FIG. 5 described above, while the antenna 430 transmits an HPRF transmission signal having the frequency f2, the suppression band variable filter 440 suppresses an HPRF reception signal having the frequency f2 which intrudes into a reception side from the circulator 420 (CIR), and passes an LPRF reception signal having the frequency f1. However, when power of the HPRF transmission signal having the frequency f2 is large, as illustrated in FIG. 8, a noise signal accompanying the HPRF transmission signal having the frequency f2 is also amplified by a high power amplifier 410 described above, and the amplified noise signal also intrudes into the reception side from the circulator 420 (CIR). Then, the suppression band variable filter 440 passes a part of the noise signal, thereby a problem that a signal-to-noise ratio of the LPRF reception signal having the frequency f1 decreases arises. Note that, the problem described above also applies to a case where the HPRF transmission signal having the frequency f2 in each of the descriptions above is replaced with an LPRF transmission signal having the frequency f1, the HPRF reception signal having the frequency f2 is replaced with the LPRF reception signal having the frequency f1, and the LPRF reception signal having the frequency f1 is replaced with the HPRF reception signal having the frequency f2.

Therefore, the decoupling circuit 460 according to the second embodiment extracts the noise signal from the HPRF transmission signal having the frequency f2 amplified by the high power amplifier 410, and suppresses the extracted noise signal by subtracting the same from the signal passed through the suppression band variable filter 440. At a timing different from that, the decoupling circuit 460 extracts the noise signal from the LPRF transmission signal having the frequency f1 amplified by the high power amplifier 410, and suppresses the extracted noise signal by subtracting the same from the signal passed through the suppression band variable filter 440. As a result, the signal-to-noise ratio of the LPRF reception signal having the frequency f1 passed through the suppression band variable filter 440 can be improved.

Note that, in the second embodiment, a configuration in which the antenna unit 41 of the radar device 2 is provided with the decoupling circuit 460 as the noise signal suppressing unit, and the decoupling circuit 460 extracts the noise signal from the transmission signal and subtracts the same from the signal passed through the suppression band variable filter 440 is described; however, it is not limited to this configuration. It is only required that at least while the circulator 420 outputs any one transmission signal out of the plurality of transmission signals to the antenna 430 and the antenna 430 transmits the transmission signal, the noise signal suppressing unit can suppress the noise signal accompanying the transmission signal, included in the signal passed through the suppression band variable filter 440.

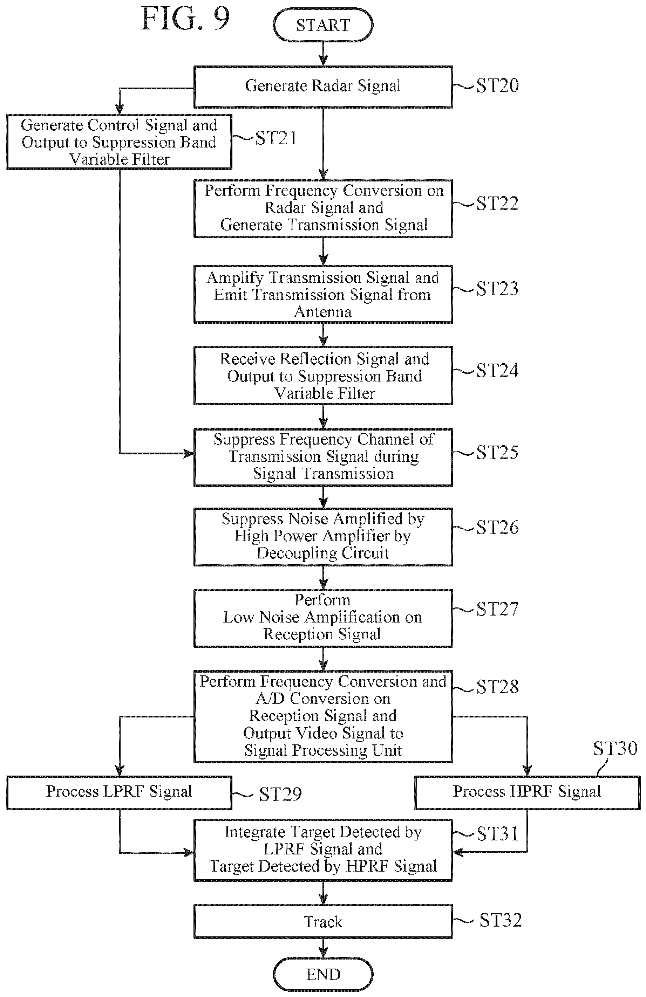

Hereinafter, an operation of the radar device 2 according to the second embodiment is described with reference to the drawings. FIG. 9 is a flowchart illustrating a transmitting and receiving method by the radar device 2 according to the second embodiment. Note that, processes from step ST20 to step ST25 and processes from step ST27 to step ST32 of the transmitting and receiving method according to the second embodiment are similar to the processes from step ST1 to step ST12 of the transmitting and receiving method according to the first embodiment. Therefore, description of the processes from step ST20 to step ST25 and processes from step ST27 to step ST32 of the transmitting and receiving method according to the second embodiment is omitted.

As illustrated in FIG. 9, the decoupling circuit 460 suppresses the noise signal accompanying the transmission signal, included in the signal passed through the suppression band variable filter 440 while the circulator 420 outputs any one transmission signal of the plurality of transmission signals to the antenna 430 and the antenna 430 transmits the transmission signal (step ST26).

As described above, the radar device 2 according to the second embodiment further includes the noise signal suppressing unit (decoupling circuit 460) that suppresses the noise signal accompanying the transmission signal, included in the signal passed through the suppression band variable filter 440 while the circulator 420 outputs any one transmission signal out of the plurality of transmission signals to the antenna 430 and the antenna 430 transmits the transmission signal.

According to the configuration described above, it is possible to suppress the noise signal accompanying the transmission signal which intrudes into the reception side from the circulator 420 and passed through the suppression band variable filter 440. As a result, the signal-to-noise ratio of the reception signal transmitted through the suppression band variable filter 440 can be improved.

### Third Embodiment

In a third embodiment, a configuration in which the radar device 1 or the radar device 2 independently transmits a plurality of signals is described. In the third embodiment, a configuration in which each of the plurality of radar devices transmits a different signal is described.

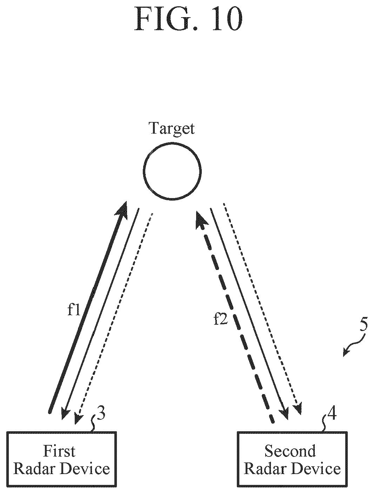

Hereinafter, the third embodiment is described with reference to the drawings. FIG. 10 is a block diagram illustrating a configuration of a first radar device 3 and a second radar device 4 according to the third embodiment. The first radar device 3 and the second radar device 4 form a radar system 5. Although not illustrated, it is assumed that each of the first radar device 3 and the second radar device 4 according to the third embodiment has a configuration similar to that of the radar device 1 according to the first embodiment or the radar device 2 according to the second embodiment.

The first radar device 3 and the second radar device 4 according to the third embodiment transmit transmission signals having different frequencies and different pulse repetition periods for each of the radar devices to a target. More specifically, in the third embodiment, the first radar device 3 transmits an LPRF transmission signal having a frequency f1 to the target, and the second radar device 4 transmits an HPRF transmission signal having a frequency f2 to the target.

The first radar device 3 receives an LPRF reflection signal obtained by the transmitted LPRF transmission signal having the frequency f1 being reflected by the target and an HPRF reflection signal obtained by the HPRF transmission signal having the frequency f2 transmitted by the second radar device 4 being reflected by the target. The second radar device 4 receives the HPRF reflection signal obtained by the transmitted HPRF transmission signal of the frequency f2 being reflected by the target and the LPRF reflection signal obtained by the LPRF transmission signal of the frequency f1 transmitted by the first radar device 3 being reflected by the target.

Note that, in the first embodiment and the second embodiment, the configuration in which the radar device 1 or the radar device 2 independently transmits the LPRF transmission signal and the HPRF transmission signal at different timings is described. In such a configuration, power consumption per one radar device increases, and there is a possibility that a problem occurs in cooling. Therefore, in the third embodiment, a plurality of radar devices is prepared, a radar system (HPRF, LPRF) and a transmission frequency are assigned to each radar device, and signals different for each of the radar devices are transmitted to the target. Therefore, it is possible to suppress the power consumption per one device and to avoid a cooling problem.

In this case also, similarly to the radar device 1 according to the first embodiment and the radar device 2 according to the second embodiment, each radar device can receive a reflection signal derived from a transmission signal transmitted by another radar device without blind by receiving all frequency bands when transmission of the transmission signal is OFF and suppressing a signal of its own transmission frequency when the transmission of the transmission signal is ON by the suppression band variable filter 440.

As described above, the plurality of radar devices (the first radar device 3 and the second radar device 4) according to the third embodiment includes a plurality of radar devices 1 according to the first embodiment or a plurality of radar devices 2 according to the second embodiment, and each of the plurality of radar devices transmits a transmission signal having a different frequency and a different pulse repetition period to the target.

According to the configuration described above, it is possible to suppress the power consumption per one device associated with the transmission of the transmission signal and to avoid the cooling problem.

### INDUSTRIAL APPLICABILITY

A radar device according to the present disclosure can reduce a transmission blind in which a reception signal lacks during a transmission period of a transmission signal, so that this is applicable to a radar technology for transmitting and receiving signals.

### REFERENCE SIGNS LIST

1, 2: radar device, 3: first radar device, 4: second radar device, 5: radar system, 20: signal generating unit, 30: transmitting and receiving unit, 40, 41: antenna unit, 50: signal processing unit, 100: processing circuit, 101: processor, 102: memory, 200: radar signal generating unit, 210: control signal generating unit, 300: transmission signal generating unit, 310: signal receiving unit, 410: high power amplifier, 420: circulator, 430: antenna, 440: suppression band variable filter, 450: low noise amplifier, 460: decoupling circuit, 510: LPRF signal processing unit, 520: HPRF signal processing unit, 530: target integrating unit, 540: tracking unit

## Claims

1. A radar device (1, 2, 3, 4) comprising:
a radar signal generating unit (200) configured to generate a plurality of low pulse repetition frequency, LPRF, signal and high pulse repetition frequency, HPRF, signal each of which has a different frequency at different timings, and output the LPRF signal and the HPRF signal each of which has been generated at different timings to a transmission signal generating unit (300), individually, and further output the frequency, a transmission start timing, and a transmission stop timing of the LPRF signal and the HPRF signal to a control signal generating unit (210), individually;
an antenna (430) configured to transmit a plurality of transmission signals each of which has a different frequency to a target, individually, and acquire a reception signal by receiving a reflection signal reflected from the target; wherein the transmission signals are generated by the transmission signal generating unit (300) by performing frequency conversion on the LPRF signal and the HPRF signal generated by the radar signal generating unit (200);
a circulator (420) configured to output the plurality of transmission signals each of which has been input from a transmission side at different timing to the antenna (430), individually, and output the reception signal acquired by the antenna (430) to a reception side;
a suppression band variable filter (440) configured to input the reception signal output by the circulator (420) to the reception side, the suppression band variable filter (440) configured to, while the circulator (420) outputs any one transmission signal out of the plurality of transmission signals to the antenna (430) and the antenna (430) transmits the transmission signal, suppress a signal of a same frequency channel as a frequency channel of the transmission signal and pass a signal of a frequency channel different from the frequency channel of the transmission signal; and
a control signal generating unit (210) configured to generate a control signal that changes a suppression band to be suppressed by the suppression band variable filter (440) for the LPRF signal and the HPRF signal on the basis of the frequency, the transmission start timing, and the transmission stop timing of the LPRF signal and the HPRF signal output by the radar signal generating unit (200).

2. The radar device (1, 2, 3, 4) according to claim 1, wherein
while transmission of the transmission signal by the antenna (430) stops, the suppression band variable filter (440) passes all input signals.

3. The radar device (1, 2, 3, 4) according to claim 1, wherein
the suppression band variable filter (440) is a tunable filter.

4. The radar device (1, 2, 3, 4) according to claim 1, wherein
the suppression band variable filter (440) includes a plurality of band rejection filters.

5. The radar device (2, 3, 4) according to claim 1, further comprising:
a noise signal suppressing unit (460) configured to suppress a noise signal accompanying the transmission signal, included in the signal passed through the suppression band variable filter (440) while the circulator (420) outputs any one transmission signal out of the plurality of transmission signals to the antenna (430) and the antenna (430) transmits the transmission signal.

6. The radar device (2, 3, 4) according to claim 5, wherein
the noise signal suppressing unit (460) is a decoupling circuit.

7. The radar device (1, 2, 3, 4) according to claim 1, wherein
the plurality of transmission signals is an LPRF transmission signal and an HPRF transmission signal having frequencies different from each other.

8. A radar system (5) comprising:
a plurality of the radar devices (3, 4) according to any one of claims 1 to 7, wherein
each of the plurality of radar devices (3, 4) transmits a transmission signal having a different frequency and a different pulse repetition period to the target.

## Patentansprüche

1. Radareinrichtung (1, 2, 3, 4), umfassend:
eine Radarsignal-Erzeugungseinheit (200), die eingerichtet ist, zu unterschiedlichen Zeitpunkten eine Vielzahl von LPRF-Signal (Low Pulse Repetition Frequency) und HPRF-Signal (High Pulse Repetition Frequency) zu erzeugen, von denen jedes eine unterschiedliche Frequenz aufweist, und das LPRF-Signal und das HPRF-Signal, von denen jedes zu unterschiedlichen Zeitpunkten erzeugt wurde, einzeln an eine Übertragungssignal-Erzeugungseinheit (300) auszugeben, und ferner die Frequenz, eine Übertragungsstartzeit und eine Übertragungsstoppzeit des LPRF-Signals und des HPRF-Signals einzeln an eine Steuersignal-Erzeugungseinheit (210) auszugeben;
eine Antenne (430), die eingerichtet ist, eine Vielzahl von Übertragungssignalen, von denen jedes eine andere Frequenz aufweist, einzeln zu einem Ziel zu übertragen und ein Empfangssignal durch Empfangen eines von dem Ziel reflektierten Reflexionssignals zu beschaffen; wobei die Übertragungssignale von der Übertragungssignal-Erzeugungseinheit (300) erzeugt werden durch Durchführen einer Frequenzumwandlung des LPRF-Signals und des HPRF-Signals, die von der Radarsignal-Erzeugungseinheit (200) erzeugt werden;
einen Zirkulator (420), der eingerichtet ist, die Vielzahl von Übertragungssignalen, von denen jedes von einer Übertragungsseite zu unterschiedlichen Zeitpunkten eingegeben wurde, einzeln an die Antenne (430) auszugeben, und das von der Antenne (430) beschaffte Empfangssignal an eine Empfangsseite auszugeben;
ein variables Unterdrückungsbandfilter (440), das eingerichtet ist, das vom Zirkulator (420) ausgegebene Empfangssignal in die Empfangsseite einzugeben, wobei das variable Unterdrückungsbandfilter (440) eingerichtet ist, während der Zirkulator (420) ein Übertragungssignal aus der Vielzahl von Übertragungssignalen an die Antenne (430) ausgibt und die Antenne (430) das Übertragungssignal überträgt, ein Signal eines gleichen Frequenzkanals wie ein Frequenzkanal des Übertragungssignals zu unterdrücken und ein Signal eines Frequenzkanals durchzulassen, der sich von dem Frequenzkanal des Übertragungssignals unterscheidet; und
eine Steuersignalerzeugungseinheit (210), die eingerichtet ist, ein Steuersignal zu erzeugen, das ein Unterdrückungsband, das durch das variable Unterdrückungsbandfilter (440) für das LPRF-Signal und das HPRF-Signal unterdrückt werden soll, auf der Grundlage der Frequenz, der Übertragungsstartzeit und der Übertragungsstoppzeit des LPRF-Signals und des HPRF-Signals, die von der Radarsignalerzeugungseinheit (200) ausgegeben werden, ändert.

2. Radareinrichtung (1, 2, 3, 4) nach Anspruch 1, wobei
während die Übertragung des Übertragungssignals durch die Antenne (430) stoppt, das variable Unterdrückungsbandfilter (440) alle Eingangssignale durchlässt.

3. Radareinrichtung (1, 2, 3, 4) nach Anspruch 1, wobei
das variable Unterdrückungsbandfilter (440) ein stimmbares Filter ist.

4. Radareinrichtung (1, 2, 3, 4) nach Anspruch 1, wobei
das variable Unterdrückungsbandfilter (440) eine Vielzahl von Bandsperrfiltern aufweist.

5. Radareinrichtung (2, 3, 4) nach Anspruch 1, ferner umfassend:
eine Rauschsignalunterdrückungseinheit (460), die eingerichtet ist, ein das Übertragungssignal begleitendes Rauschsignal zu unterdrücken, das in dem Signal enthalten ist, das durch das variable Unterdrückungsbandfilter (440) durchgelassen wird, während der Zirkulator (420) ein beliebiges Übertragungssignal aus der Vielzahl von Übertragungssignalen an die Antenne (430) ausgibt und die Antenne (430) das Übertragungssignal überträgt.

6. Radareinrichtung (2, 3, 4) nach Anspruch 5, wobei die Rauschsignalunterdrückungseinheit (460) eine Entkopplungsschaltung ist.

7. Radareinrichtung (1, 2, 3, 4) nach Anspruch 1, wobei
die Vielzahl von Übertragungssignalen ein LPRF-Übertragungssignal und ein HPRF-Übertragungssignal sind, die zueinander unterschiedliche Frequenzen aufweisen.

8. Radarsystem (5), umfassend:
eine Vielzahl von Radareinrichtungen (3, 4) nach einem der Ansprüche 1 bis 7, wobei
jede der Vielzahl von Radareinrichtungen (3, 4) ein Übertragungssignal, das eine unterschiedliche Frequenz und eine unterschiedliche Pulswiederholungsperiode aufweist, an das Ziel überträgt.

## Revendications

1. Dispositif radar (1, 2, 3, 4), comprenant :
une unité de génération de signal radar (200) configurée pour générer une pluralité de signaux à basse fréquence de répétition des impulsions, LPRF, et de signaux à haute fréquence de répétition des impulsions, HPRF, dont chacun présente une fréquence différente à des synchronisations différentes, et délivrer en sortie le signal LPRF et le signal HPRF dont chacun a été généré à des synchronisations différentes vers une unité de génération de signal de transmission (300), individuellement, et ensuite délivrer en sortie la fréquence, une synchronisation de début de transmission, et une synchronisation d'arrêt de transmission du signal LPRF et du signal HPRF vers une unité de génération de signal de commande (210), individuellement ;
une antenne (430) configurée pour transmettre une pluralité de signaux de transmission dont chacun présente une fréquence différente vers une cible, individuellement, et acquérir un signal de réception en recevant un signal de réflexion réfléchi par la cible ; dans lequel les signaux de transmission sont générés par l'unité de génération de signal de transmission (300) en effectuant une conversion de fréquence sur le signal LPRF et le signal HPRF générés par l'unité de génération de signal radar (200) ;
un circulateur (420) configuré pour délivrer en sortie la pluralité de signaux de transmission dont chacun a été implémenté à partir d'un côté de transmission à une synchronisation différente vers l'antenne (430), individuellement, et délivrer en sortie le signal de réception acquis par l'antenne (430) vers un côté de réception ;
un filtre de suppression de bande variable (440) configuré pour entrer le signal de réception délivré en sortie par le circulateur (420) vers le côté de réception, le filtre de suppression de bande variable (440) étant configuré pour, tandis que le circulateur (420) délivrer en sortie un signal de transmission parmi la pluralité de signaux de transmission vers l'antenne (430) et l'antenne (430) transmet le signal de transmission, supprimer un signal d'un même canal de fréquence qu'un canal de fréquence du signal de transmission et faire passer un signal d'un canal de fréquence différent du canal de fréquence du signal de transmission ; et
une unité de génération de signal de commande (210) configurée pour générer un signal de commande qui change une bande de suppression à supprimer par le filtre de suppression de bande variable (440) pour le signal LPRF et le signal HPRF sur la base de la fréquence, de la synchronisation de début de transmission et de la synchronisation d'arrêt de transmission du signal LPRF et du signal HPRF délivrés en sortie par l'unité de génération de signal radar (200).

2. Dispositif radar (1, 2, 3, 4) selon la revendication 1, dans lequel,
lorsque la transmission du signal de transmission par l'antenne (430) s'arrête, le filtre de suppression de bande variable (440) fait passer tous les signaux d'entrée.

3. Dispositif radar (1, 2, 3, 4) selon la revendication 1, dans lequel
le filtre de suppression de bande variable (440) est un filtre accordable.

4. Dispositif radar (1, 2, 3, 4) selon la revendication 1, dans lequel
le filtre de suppression de bande variable (440) comprend une pluralité de filtres de réjection de bande.

5. Dispositif radar (2, 3, 4) selon la revendication 1, comprenant en outre :
une unité de suppression de signal de bruit (460) configurée pour supprimer un signal de bruit accompagnant le signal de transmission, inclus dans le signal passé à travers le filtre de suppression de bande variable (440) tandis que le circulateur (420) délivre en sortie un quelconque signal de transmission parmi la pluralité de signaux de transmission vers l'antenne (430), et l'antenne (430) transmet le signal de transmission.

6. Dispositif radar (2, 3, 4) selon la revendication 5, dans lequel l'unité de suppression de signal de bruit (460) est un circuit de découplage.

7. Dispositif radar (1, 2, 3, 4) selon la revendication 1, dans lequel
la pluralité de signaux de transmission est un signal de transmission LPRF et un signal de transmission HPRF présentant des fréquences différentes l'une de l'autre.

8. Système radar (5), comprenant :
une pluralité de dispositifs radar (3, 4) selon l'une quelconque des revendications 1 à 7,
dans lequel chacun de la pluralité de dispositifs radar (3, 4) transmet un signal de transmission présentant une fréquence différente et une période de répétition des impulsions différente à la cible.
